(19) **Europäisches Patentamt**

**European Patent Office**

**Office européen des brevets**

(11) **EP 0 848 877 B1**

(12) **EUROPÄISCHE PATENTSCHRIFT**

(45) Veröffentlichungstag und Bekanntmachung des Hinweises auf die Patenterteilung:
**05.09.2001  Patentblatt 2001/36**

(51) Int Cl.[7]: **H04L 27/26**, H04L 1/08, H04B 7/04

(21) Anmeldenummer: **96920709.1**

(22) Anmeldetag: **27.06.1996**

(86) Internationale Anmeldenummer:
**PCT/DE96/01134**

(87) Internationale Veröffentlichungsnummer:
**WO 97/09812 (13.03.1997 Gazette 1997/12)**

(54) **VERFAHREN ZUM ÜBERTRAGEN VON DIGITALEN DATEN ÜBER STÖRBEHAFTETE RUNDFUNKKANÄLE UND VORRICHTUNG ZUM EMPFANG VON ÜBER STÖRBEHAFTETE RUNDFUNKKANÄLE ÜBERMITTELTEN DIGITALE DATEN**

PROCESS FOR TRANSFERRING DIGITAL DATA VIA INTERFERENCE-AFFECTED RADIO CHANNELS AND DEVICE FOR RECEIVING DIGITAL DATA TRANSMITTED VIA INTERFERENCE-AFFECTED RADIO CHANNELS

PROCEDE DE TRANSFERT DE DONNEES NUMERIQUES PAR DES CANAUX RADIO PERTURBES PAR DES PARASITES, ET DISPOSITIF POUR LA RECEPTION DE DONNEES NUMERIQUES TRANSMISES PAR CANAUX RADIO PERTURBES PAR DES PARASITES

(84) Benannte Vertragsstaaten:
**CH DE ES FR GB IT LI SE**

(30) Priorität: **07.09.1995  DE 19532959**

(43) Veröffentlichungstag der Anmeldung:
**24.06.1998  Patentblatt 1998/26**

(73) Patentinhaber: **ROBERT BOSCH GMBH**
**70442 Stuttgart (DE)**

(72) Erfinder:
 • **HALLIER, Jürgen**
  **D-31188 Holle (DE)**
 • **SCHULZE, Henrik**
  **D-59872 Meschede (DE)**
 • **LAUTERBACH, Thomas**
  **D-90475 Nürnberg (DE)**

(56) Entgegenhaltungen:
EP-A- 0 572 171        EP-A- 0 709 980
WO-A-88/00417         WO-A-95/06368
GB-A- 2 291 314        US-A- 3 195 048
US-A- 5 416 767

 • **IEEE TRANSACTIONS ON COMMUNICATIONS, OCT. 1994, USA, Bd. 42, Nr. 10, ISSN 0090-6778, Seiten 2908-2914, XP002019915 MOOSE P H: "A technique for orthogonal frequency division multiplexing frequency offset correction"**

**Beschreibung**

Stand der Technik

Die Erfindung geht aus von einem Verfahren zur Übertragung von digitalen Daten und einer Vorrichtung zum Empfang von digitalen Daten nach der Gattung des Hauptanspruchs. Es ist schon ein Verfahren zur Übertragung von digitalen Daten eines Rundfunkprogramms über störbehaftete Rundfunkkanäle aus einem Artikel von Georg Plenge, "DAB - ein neues Hörrundfunksystem Stand der Entwicklung und Wege zu seiner Einführung", Rundfunktechnische Mitteilungen, Jahrgang 35, 1991, Heft 2 Seite 45 bis 66 bekannt. Bei dem dort beschriebenen Übertragungsverfahren wird das Modualtionsverfahren COFDM (Coded Orthogonal Frequency Division Multiplexing) verwendet. Dabei wird ein Bündel von z.B. 6 Rundfunkprogrammen auf einem zugeordneten Frequenzblock mit einer Bandbreite von 1,5 MHz übertragen. Der jeweils übertragene Zeitabschnitt eines Rundfunkprogramms wird aber nur einmal übertragen.

Aus der WO-A-9 506 368 ist ein System zur Funkübertragung von Informationen, die im Laufe ihrer Übertragung Störeinflüssen unterliegen, bekannt, bei dem die zu übertragenden Informationen in Form zweier parallel, aber zeitversetzt übertragener Datenströme derselben Trägerfrequenz aufmoduliert werden, wobei beim Empfang der beiden parallel übertragenen Datenströme mittels eines entsprechenden Detektors festgestellt wird, ob und gegebenenfalls welcher der beiden Datenströme während seiner Übertragung gestört worden ist. Empfangsseitig werden dann die im Laufe ihrer Übertragung gestörten Informationen durch die zeitversetzt und somit in der Regel ungestört übertragenen Informationen des zeitversetzt übertragenen Datenstroms ersetzt.

Vorteile der Erfindung

Das erfindungsgemäße Verfahren bzw. die erfindungsgemäße Vorrichtung mit den kennzeichnenden Merkmalen des Anspruchs 1 bzw. 10 hat demgegenüber den Vorteil, daß für bestimmte Rundfunkprogramme eine wiederholte Übertragung des gleichen Zeitabschnitts des Rundfunkprogramms vorgesehen ist. Anschließend findet eine gemeinsame Auswertung der erstmalig und wiederholt übertragenen Daten eines Zeitabschnitts des Rundfunkprogramms statt. Durch die wiederholte Übertragung des gleichen Zeitabschnitts eines Rundfunkprogramms wird dem Datenstrom Redundanz hinzugefügt. Der Empfänger des Rundfunkprogramms kann diese Redundanz mit einem geringen Zusatzaufwand ausnutzen. Das Verfahren bietet insbesondere für den Mobilempfang in einem fahrenden Auto Vorteile. Bewegt sich das Auto z.B. am Rand des Sendegebietes, so werden vermehrt Störungen auftreten, die zu Fehlauswertungen der übertragenen Daten führen können. Auch durch Mehrwegeempfang können Störungen vermehrt auftreten. Durch die wiederholte Übertragung derselben Daten nach einem Zeitmultiplexverfahren wird nun erreicht, daß die Störsicherheit deutlich erhöht wird. Es werden aller Wahrscheinlichkeit nach nämlich nicht mehr die gleichen Daten gestört sein, wie bei der vorherigen Übertragung. Diese Tatsache kann in dem Empfänger ausgenutzt werden und es kann bei der Demodulation quasi ein Mittelwert der Einzelübertragungen gebildet werden, der dann eine höhere Störsicherheit aufweist:.

Natürlich wird durch die wiederholte Übertragung derselben Daten die Datenübertragungskapazität des Rundfunkkanals verringert. Ggfs. können nicht mehr z.B. sechs Rundfunkprogramme in dem Rundfunkkanal übertragen werden, sondern z.B. nur noch drei, wobei jedes doppelt übertragen wird. Durch die erhöhte Störsicherheit können die Sender die jeweiligen Programmblöcke mit geringerer Senderleistung abstrahlen, ohne daß das Sendegebiet dadurch verkleinert würde. Dies wiederum erlaubt geringere Wiederverwendungsabstände für denselben Frequenzblock. Derselbe Frequenzblock kann dadurch in einem Land für die Übertragung mehrerer unterschiedlicher Rundfunkprogramme besser genutzt werden.

Das erfindungsgemäße Verfahren kann sehr vorteilhaft insbesondere bei dem Lokalfunk eingesetzt werden, bei dem in relativ vielen kleinen Gebieten jeweils relativ wenig Programme auszustrahlen sind. In dünnbesiedelten Gebieten brauchen unter Umständen gar nicht sechs Programme ausgestrahlt zu werden, sondern vielleicht nur zwei oder drei. In diesem Fall ist die Mehrfachausstrahlung eines oder mehrerer Programme sehr sinnvoll. Der Empfänger, der dies (mit vertretbarem Zusatzaufwand) ausnutzen kann, wird eine erheblich höhere Versorungssicherheit gewährleisten.

Durch die in den Unteransprüchen aufgeführten Maßnahmen sind vorteilhafte Weiterbildungen und Verbesserungen des im Hauptanspruch angegebenen Verfahrens möglich. So ist es vorteilhaft, daß die wiederholte Übertragung der Daten eines Zeitabschnitts des Rundfunkprogramms in demselben Übertragungsrahmen, wie die erstmalige Übertragung der Daten des gleichen Zeitabschnitts des Rundfunkprogramms geschieht. Der Empfänger braucht dann nämlich nur die Daten innerhalb eines Übertragungsrahmens auswerten. Dadurch wird der Verwaltungsaufwand für die Auswertung der wiederholt übertragenen Daten gering gehalten.

Weiterhin vorteilhaft ist, daß die wiederholte Übertragung der Daten eines Zeitabschnitts des Rundfunkprogramms innerhalb des Übertragungsrahmens erst nach einem zeitlichen Mindestabstand nach der erstmaligen Übertragung derselben Daten erfolgt. Hierdurch wird weitgehend sichergestellt, daß auch eine längere Störung nicht beide Übertragungen nacheinander gemeinsam beeinflussen kann.

In bestimmten Fällen kann es vorteilhaft sein, wenn die wiederholte Übertragung in einem anderen Übertragungsrahmen geschieht, als die erste Übertragung. Dies gilt z.B. für die Situation, wenn in einem Gebiet sehr häufig Verkehrsstockungen auftreten und Fahrzeuge sehr langsam ein sogenanntes Funkloch durchqueren. Durch die stärke Zeitverzögerung zwischen den Übertragungen können dann Störungen häufig besser beseitigt werden.

Das erfindungsgemäße Verfahren kann sehr vorteilhaft mit dem Modulationsverfahren OFDM (Orthogonal Frequency Division Multiplexing) verwendet werden. Dabei werden nämlich die Daten verteilt auf eine sehr große Anzahl von Unterträgern eines Frequenzblocks übertragen. Störungen wirken sich vielfach nur auf einzelne Träger aus. Dadurch wird schon erreicht, daß auftretende Störungen nicht eine große Anzahl von aufeinanderfolgenden Bits stören können.

In diesem Zusammenhang ist es sehr vorteilhaft, wenn bei der Übertragung der Daten nach dem Modulationsverfahren OFDM die sich entsprechenden Bits der Daten bei der erstmaligen und der wenigstens einen weiteren wiederholten Übertragung auf unterschiedlichen Trägerwellen übertragen werden. Hierdurch wird erreicht, daß nicht immer dieselben Bits gestört werden, wenn Störungen für einzelne Träger besonders lange andauern bzw. vermehrt auftreten. Insgesamt ist es sehr vorteilhaft, wenn eine möglichst gut verwürfelte Übertragung der einzelnen Bits im Zeitbereich, wie auch im Frequenzbereich vorgenommen wird.

Für eine Vorrichtung zum Empfang der digitalen Daten eines Rundfunkprogramms, die nach dem Verfahren nach einem der Ansprüche 1 bis 9 übertragen werden, ist es vorteilhaft, daß für sie bloß ein Zwischenspeicher und weiterhin eine Addierstufe als Zusatzaufwand vorgesehen sein muß, in der die Daten der erstmaligen Übertragung mit den entsprechenden Daten der wiederholten Übertragung addiert werden.

Sehr vorteilhaft ist auch, wenn die Addition der vielstufig quantisierten Werte (soft decision Werte) vor einer Kanaldecodierung stattfindet. Dadurch wird erreicht, daß die Entscheidungsvariablen aufgrund verläßlicherer Eingangswerte gebildet werden können, als bei einer Einzelübertragung.

Zeichnung

Ein Ausführungsbeispiel der Erfindung ist in der Zeichnung dargestellt und in der nachfolgenden Beschreibung näher erläutert. Es zeigen

Figur 1 einen Übertragungsrahmen zur Übertragung der Daten von Rundfunkprogrammen;
Figur 2 eine Darstellung für die Addition komplexer Zahlen;
Figur 3 ein Beispiel für eine wiederholte Übertragung der selben Daten für einen Zeitabschnitt eines Rundfunkprogramms;
Figur 4 ein grobes Blockschaltbild für die Senderseite zur Übertragung der Daten von Rundfunkprogrammen;
Figur 5 ein grobes Blockschaltbild eines Rundfunkempfängers zum Empfangen von Daten von Rundfunkprogrammen.

Beschreibung der Erfindung

Das erfindungsgemäße Verfahren kann sehr vorteilhaft bei dem neuen digitalen Rundfunkübertragungsverfahren DAB (Digital Audio Broadcasting) eingesetzt werden. Zu diesem neuen Rundfunkübertragungsverfahren sind die wesentlichen technischen Merkmale in der Spezifikation zu dem Rundfunkübertragungsverfahren beschrieben. Diese Spezifikation lautet: "European Telecommunications Standards Institute (ETSI) und European Broadcasting Union (EBU); Radio broadcast systems; Digital Audio Broadcasting (DAB) to mobile, portable and fixed receivers, Draft ETS 300 401, Genf und Sophia Antipolis, Februar 1995".

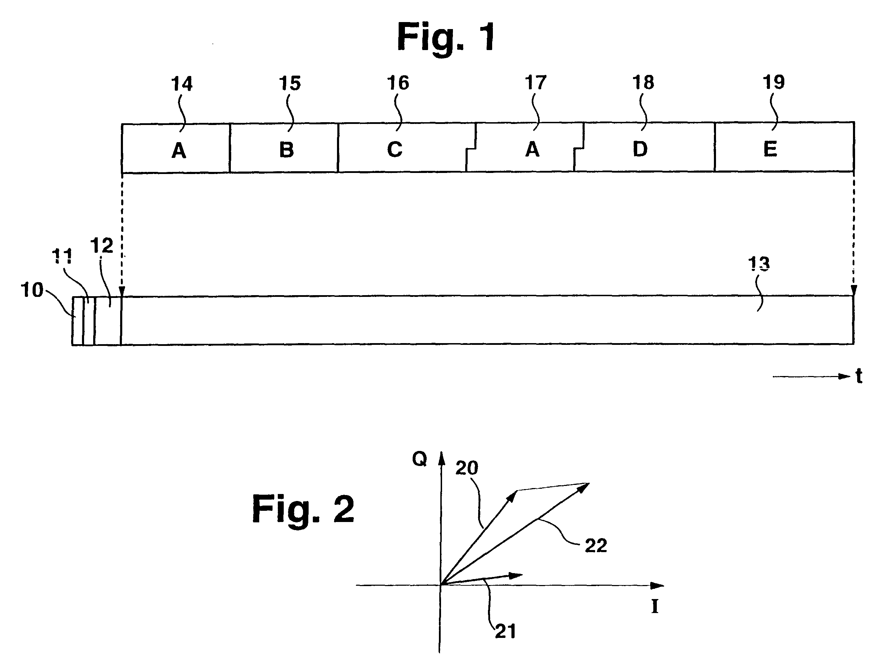

Im unteren Teil der Figur 1 ist der Übertragungsrahmen, der auch bei dem Rundfunkübertragungsverfahren DAB eingesetzt wird, dargestellt. Mit der Bezugszahl 10 ist das Null-Symbol bezeichnet. Mit der Bezugszahl 11 ist das Phasen-Referenz-Symbol TFPR (Time-Frequency-Phase-Reference) bezeichnet. Das Null-Symbol markiert den Rahmenanfang und dient zur Grobsynchronisation. Der Empfänger kann anhand des Null-Symbols die Rauschcharakteristik des Kanals ermitteln und bekommt so Informationen über das Auftreten von Störungen. Das TFPR-Symbol dient der Frequenzregelung, der feinen Symbolsynchronisation sowie als Anfangsphase für die DQPSK-Moduladion (Differential-Quadratur-Phase-Shift-Keying). Anschließend werden drei Symbole in dem Feld 12 übertragen. Es handelt sich um Fast Information Channel-Symbole (FIC). In diesen Symbolen sind Informationen darüber enthalten, wo im nachfolgenden Datenfeld 13 die bestimmten Programmen und Diensten zugeordneten Daten zu finden sind und wie die jeweilige Kanalcodierung aussieht. Im nachfolgenden Datenfeld 13 werden 72 weitere Symbole übertragen. Hier sind dann die Audio-Daten von unterschiedlichen Radioprogrammen und ggf. weitere Zusatzdaten enthalten.

Bei dem Rundfunkübertragungsverfahren DAB wird das Multiträgerverfahren OFDM (Orthogonal Frequency Division Multiplexing) verwendet. Dieses Verfahren ist aus dem Stand der Technik bekannt, es wird diesbezüglich sowohl auf die zuvor erwähnte DAB-Spezifikation und den Artikel von M. Alard, R. Lassalle, "Principles of modulation and channel coding for digital broadcasting for mobile receivers", EBU review, Technical No. 224, August 1987, S. 168- 190 verwiesen. Die erwähnten Symbole betreffen daher OFDM-Symbole. In der erwähnten Spezifikation ist z.B. der Übertragungsmode (Transmission Mode) TMII so definiert, daß 76 OFDM-Symbole pro Rahmen (ohne Null-Symbol) übertragen werden. Jedes Symbol belegt 384 Unterträger im entsprechenden Rundfunkkanal. Ein solcher Rundfunkkanal hat eine Bandbreite von 1,5 MHz. Der gesamte Übertragungsrahmen von Figur 1 incl. des Null-Symbols wird in einer Zeit von 24 ms. übertragen. Da bei DAB das Modulationsverfahren π/4-Shift-DQPSK angewendet wird, wird pro Unterträger und pro OFDM-Symbol eine Information von jeweils zwei Bit übertragen. Bei 384 Unterträgern ergibt sich somit pro OFDM-Symbol eine Übertragungskapazität von 768 Bit. In dem Datenfeld 13, das auch als Nutzkanal MSC (Main Service Channel) bezeichnet wird, werden also insgesamt 55 296 Bits transportiert. Der gesamte Übertragungsrahmen von Figur 1 wird auch als CIF (Common Interleaved Frame) bezeichnet. Die genannte Übertragungskapazität im Datenfeld 13 steht dem Anwender nach der erwähnten Spezifikation frei zur Verfügung.

Vielfach wurde vorgeschlagen, diese Übertragungskapazität für die gleichzeitige Ausstrahlung von sechs Rundfunkprogrammen zu nutzen. Natürlich hängt die Nutzung dieses Datenfeldes 13 vom Einzelfall ab. Sollen beispielsweise einige Programme mit sehr großer Audio-Datenrate übertragen werden, so können ggf. nur weniger als sechs Audio-Programme in dem Übertragungsrahmen transportiert werden. Andererseits könnten auch noch mehr als sechs Radioprogramme mit geringerer Audio-Datenrate in dem Übertragungsrahmen transportiert werden.

Erfindungsgemäß wird jetzt das Folgende vorgeschlagen: Es wird nicht die Übertragungskapazität in dem Übertragungsrahmen vollständig für unterschiedliche Rundfunkprogramme aufgebraucht, sondern stattdessen werden die Daten eines Rundfunkprogramms doppelt oder mehrfach in den Übertragungsrahmen eingefügt. Dies wird aus dem oberen Teil von Figur 1 deutlich. Mit den Bezugszahlen 14 bis 19 sind sogenannte Unterkanäle (Subchannels) bezeichnet. Im Unterkanal 14 werden z.B. sämtliche Audio-Daten eines Rundfunkprogramms A übertragen. Natürliche betreffen diese Audio-Daten nur einen kurzen Zeitabschnitt des Rundfunkprogramms. Der nachfolgende Zeitabschnitt des Rundfunkprogramms folgt dann erst mit dem nächsten Übertragungsrahmen. In dem Unterkanal 15 werden entsprechend die Audio-Daten eines Rundfunkprogramms B übertragen. In dem Unterkanal 16 werden die Daten eines weiteren Rundfunkprogramms C übertragen. In dem Unterkanal 17 werden erneut die gleichen Daten des Rundfunkprogramms A übertragen, wie auch in dem Unterkanal 14. Im Unterkanal 18 werden schließlich die Daten des Rundfunkprogramms D übertragen und im Unterkanal 19 die Audio-Daten eines weiteren Rundfunkprogramms E.

Durch die mehrfache Übertragung des Rundfunkprogramms A wird nun folgendes erreicht: Vom Empfänger wird ein reelles Signal mit sehr hoher Frequenz empfangen. Dieses Signal wird im Empfänger in einer Hochfrequenz-Stufe in ein komplexes Basisband gemischt. Die hierfür nötigen Verfahren sind bekannt. Beispielsweise kann das reelle Bandpaßsignal in zwei Kanälen mit in Quadratur stehenden Trägern moduliert und anschließend tiefpaßgefiltert werden. Dies ist beispielsweise eine analoge Signalverarbeitung. Hier wird anschließend durch Analog/Digital-Wandlung ein digitaler Datenstrom für die Inphase- und Quadraturkomponenten des komplexen Basisbandsignals erzeugt. Es sind auch Verfahren bekannt, bei denen mit Hilfe von digitaler Signalverarbeitung das reelle Bandpaßsignal ins komplexe Basisband gemischt wird und so die Datenströme für die Inphase -und Quadraturkomponenten erzeugt werden. Diesbezüglich wird auf den Artikel von L.E. Pellon: "A Double Nyquist Digital Product Detector for Quadratursampling", IEEE Transactions und Signalprocessing Vol. 40, No. 7, Juli 1992 Seite 1670 bis 1681 verwiesen.

Die Abtastwerte für das komplexe Basisbandsignal werden jeweils für die Dauer eines OFDM-Symbols gesammelt und einem OFDM-Demodulator zugeführt. Dort findet dann nach dem bekannten Verfahren eine diskrete Fourier Transformation mit Hilfe des bekannten FFT (Fast Fourier Transform) Algorithmus statt. Erhalten werden so komplexe Symbole $Z_{l,k}$ für die einzelnen Unterträger, deren Phasenlagen die Information beinhalten. Dabei deutet der Index 1 an, daß die komplexen Zahlen für das l-te OFDM-Symbol gültig sind. Der Index k gibt an, daß es sich um die komplexe Zahl für den k-ten Unterträger handelt. Bei differentieller Modulation z.B. DQPSK findet im Demodulator die folgende Produktbildung statt: $u_{l,k} = Z_{l,k} \cdot Z^*_{l-1,k}$

Dabei bedeutet $u_{l,k}$ die komplexe Darstellung des jeweiligen Symbols nach der Fourier-Transformation und DQPSK-Demodulation. $Z^*_{l-1,k}$ stellt die konjugiert komplexe Zahl für den k-ten Unterträger des zuvor übertragenen l-1-ten OFDM-Symbols dar.

Bei dem herkömmlichen Übertragungsverfahren werden die empfangenen Symbole $u_{l,k}$ alle separat ausgewertet. Dies geschieht so, daß Real- und Imaginärteil des komplexen Symbols $u_{l,k}$ untersucht werden. Bei dieser Auswertung werden entsprechend der Größe und des Vorzeichens von Real- und Imaginärteil von $u_{l,k}$ Entscheidungsvariablen gebildet. Dies geschieht in einem Kanaldecoder, der z.B. nach einem Viterbi-Algorithmus die aufmodulierten Daten zurückgewinnt.

Erfindungsgemäß findet bei den doppelt übertragenen Symbolen des Rundfunkprogramms A eine gemeinsame Auswertung statt. Hierzu werden die komplexen Darstellungen der sich entsprechenden Symbole $u_{l,k}$ beider Übertragungen miteinander addiert. Es gilt die folgende Formel:

$$u_{l,k} = u_{l,k}^{(1)} + u_{l,k}^{(2)}.$$

$u_{l,k}^{(1)}$ gibt die komplexe Darstellung des 1-ten Symbols für den k-ten Unterträger bei der erstmaligen Übertragung an. $u_{l,k}^{(2)}$ gibt die komplexe Darstellung des l-ten Symbols für den k-ten Unterträger nach der wiederholten Übertragung an. Erst danach werden die Entscheidungsvariablen im Kanaldecoder gebildet. Durch die Addition der komplexen Zahlen für die Symbole $u_{l,k}^{(1)}$ und $u_{l,k}^{(2)}$ wird eine beträchtliche Erhöhung der Störfestigkeit bei der Auswertung der übertragenen Daten gewonnen. Dieser Gewinn ist z.B. in Figur 2 verdeutlicht.

In Figur 2 bezeichnet die Bezugszahl 20 die komplexe Zahl $u_{l,k}^{(1)}$ für den K-ten Unterträger des l-ten Symbols nach der erstmaligen Übertragung. Mit der Bezugszahl 21 ist die komplexe Zahl $u_{l,k}^{(2)}$ für den k-ten Unterträger des l-ten Symbols nach der zweiten Übertragung bezeichnet. Die komplexen Zahlen sind durch Pfeile in der komplexen Zahlenebene dargestellt. Der Realteil der jeweiligen komplexen Zahl wird durch die I-Komponente (Inphase-Komponente) bezeichnet. Der Imaginärteil der jeweiligen komplexen Zahl wird durch die Q-Komponente (Quadratur-Komponente) bezeichnet. Durch Addition beider komplexer Zahlen 20 und 21 entsteht die komplexe Zahl 22. Die Addition komplexer Zahlen entspricht ja bekanntlich einer Vektoraddition so daß der Pfeil 22 das Resultat dieser Addition darstellt. Bei der bei dem Rundfunkübertragungsverfahren DAB verwendeten DQPSK-Modulation kommen als Phasenwinkel für die einzelnen Unterträger nur die Werte $0, \pi/4, \pi/2, 3/4\pi, \pi, 5/4\pi, 3/2\pi$, und $7/4\pi$ vor. Wie bei der komplexen Zahl 21 erkennbar ist, ist der K-te Unterträger bei der wiederholten Übertragung stark abgeschwächt, was durch den geringen Betrag dieser Zahl deutlich wird. Anhand der komplexen Zahl 20 ist erkennbar, daß der K-te Unterträger bei der erstmaligen Übertragung wesentlich stärker empfangen worden ist. Jedoch ist die Zuordnung zu einem der möglichen Phasenwinkel relativ schwierig. Nach der Addition beider komplexer Zahlen ergibt sich ein starker Träger, dessen Phasenwinkel sehr nah an $\pi/4$ liegt. Die Entscheidung für einen empfangenen Phasenwinkel ist also bei der resultierenden komplexen Zahl 22 deutlich leichter und mit erhöhter Sicherheit durchzuführen, als für die komplexen Zahlen 20 und 21 nach den Einzelübertragungen. Natürlich spielen bei der Entscheidung um welchen Phasenwinkel es sich tatsächlich handelt auch noch andere Kriterien eine Rolle, wie z.B. ob der Phasenwinkel gegenüber der vorhergehenden Übertragung eines Phasenzustandes auf diesem Unterträger erlaubt ist oder nicht. Dies gilt insbesondere für die verwendete Modulationsart DQPSK.

Durch die wiederholte Übertragung der OFDM-Symbole wird also in Verbindung mit der beschriebenen Auswertemethode eine Erhöhung der Störsicherheit bei der Bildung der Entscheidungsvariablen für die Phasenzustände der Einzelträger erreicht. Dabei werden Zuverlässigkeitsinformationen, die durch Analyse der komplexen Zahlen für die Einzelträger und die Einzelübertragungen gewonnen werden können automatisch berücksichtigt. Bei der Addition der komplexen Zahlen werden nämlich die Beträge der jeweiligen komplexen Zahlen sowie die Phasenwinkel entsprechend berücksichtigt.

Da die Störungen des Übertragungskanals zeitlich sehr stark fluktuieren und auch frequenzselektiv auftreten, ist es zur weiteren Erhöhung der Störfestigkeit sinnvoll, die wiederholte Übertragung derselben Daten nicht direkt nacheinander durchzuführen, sondern zwischen der erstmaligen Übertragung der Daten und der wiederholten Übertragung der Daten erst noch die Daten von einem anderen oder mehreren anderen Rundfunkprogrammen innerhalb der Zeit für die Übertragung eines Übertragungsrahmens durchzuführen. Dies ist in Figur 1 durch die Übertragung der Daten der Rundfunkprogramme B, C zwischen den Übertragungen der Daten des Rundfunkprogramms A gegeben.

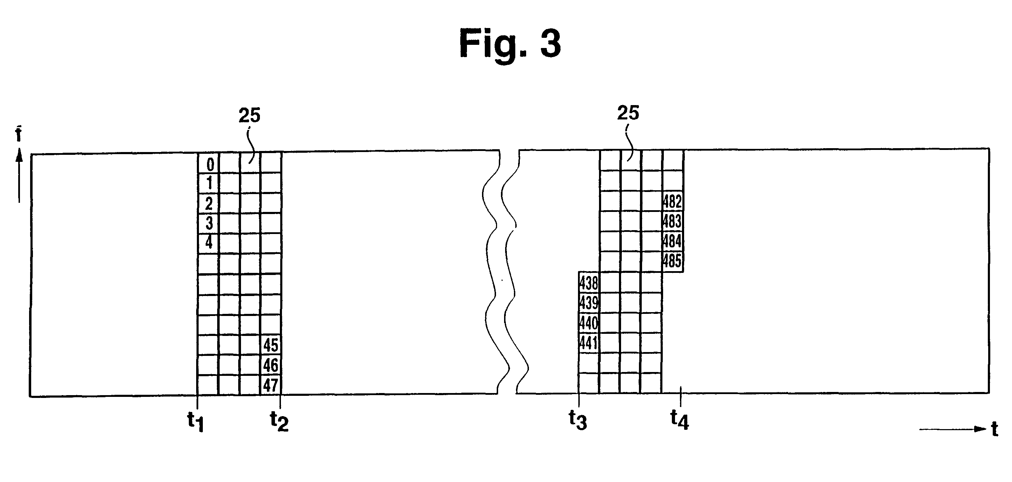

Auch ist es sinnvoll, daß nicht die gleichen Bits bei der erstmaligen Übertragung und der wiederholten Übertragung auf den gleichen Unterträgern übertragen werden, sondern daß statt dessen eine größtmögliche Verwürfelung diesbezüglich durchgeführt wird. Dies ist an einem Beispiel in Figur 3 näher dargestellt. Das dortige Beispiel gilt für den Übertragungsmode TMII nach dem Rundfunkübertragungsverfahren DAB. Die Bits werden auf 384 Unterträgern übertragen. Mit der Bezugszahl 25 sind sogenannte Kapazitätseinheiten (Capacity Unit) von dem Übertragungsrahmen bezeichnet. Zum Zeitpunkt $t_1$ wird mit der erstmaligen Übertragung der Daten für das Rundfunkprogramm A begonnen. Die Kapazitätseinheiten sind von 0 bis 47 durchnumeriert. In jeder Kapazitätseinheit werden jeweils 64 Bit übertragen. Da auf jedem Unterträger jeweils 2 Bit übertragen werden, belegen die dargestellten 12 Kapazitätseinheiten alle 384 Unterträger. Zum Zeitpunkt $t_2$ sind sämtliche Daten des Radioprogramms A erstmalig übertragen. Zum Zeitpunkt $t_3$ wird mit der wiederholten Übertragung der Daten des Rundfunkprogramms A begonnen. Zwischen den Zeitpunkten $t_2$ und $t_3$ werden die Daten von anderen Rundfunkprogrammen übertragen. Bei der wiederholten Übertragung der Daten des Rundfunkprogramms A werden die ersten Daten aber erst in der Kapazitätseinheit 438 übertragen. An der Figur 3 ist deutlich erkennbar, daß dadurch erreicht wird, daß die gleichen Daten nicht auf den gleichen Unterträger übertragen werden. So werden auftretende Störungen einzelner Unterträger, die lange andauern, quasi eliminiert, weil bei der wiederholten Übertragung die über den gestörten Träger übertragenen Daten auf einem anderen Unterträger übertragen werden, der mit hoher Wahrscheinlichkeit keine Störung aufweist. Simulationsrechnungen haben ergeben, daß durch die beschriebenen Maßnahmen der nötige Störabstand für unbeeinträchtigten Empfang gegenüber dem herkömmlichen Übertragungsverfahren um bis zu 13 dB herabgesetzt sein kann. Natürlich wird durch die wiederholte Ausstrahlung die Übertragungskapazität verringert. In manchen Gebieten existieren jedoch gar nicht so viele Lokalfunkbetreiber, so daß die erwähnten Maßnahmen besonders in solchen Fällen sehr vorteilhaft einzusetzen sind.

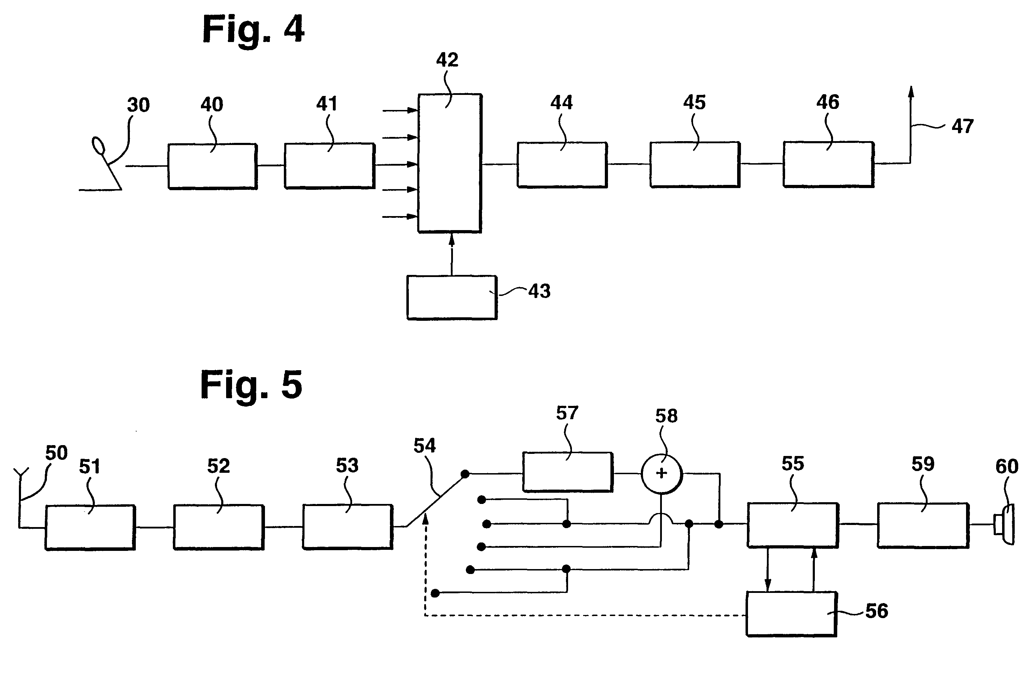

Figur 4 zeigt jetzt schematisch die Komponenten, die auf der Senderseite erforderlich sind, um das beschriebene Verfahren zu realisieren. Mit der Bezugszahl 30 ist eine Tonstudio bezeichnet, in dem eine Hörfunksendung aufgenommen wird. Die aufgenommenen Audio-Daten werden in einem Quellcoder 40 einer Tondatenreduktion unterzogen. Die reduzierten Daten werden dann einem Kanalcoder 41 zugeführt. Die codierten Daten werden dann einem Multiplexer 42 zugeführt. Selbstverständlich werden noch andere Rundfunkprogrammdaten dem Multiplexer zugeführt. Die anderen Daten werden auf die gleiche Art und Weise erzeugt. Die Steuerung des Multiplexers 42 übernimmt eine Steuereinheit 43. Die Steuereinheit 43 ist auch unter dem Ausdruck FIC-Generator (Fast Information Channel) bekannt. Die jeweils am Ausgang des Multiplexers 42 anstehenden Daten werden einem OFDM/DQPSK-Modulator 44 zugeführt. Die so entstandenen Signale werden in einem Digital/Analog-Wandler 45 umgewandelt und in einer anschließenden Hochfrequenzstufe 46 in das entsprechende HF-Signal umgewandelt und verstärkt. Das entstehende Signal wird über eine Sendeantenne 47 abgestrahlt. Welche Sendung wann wiederholt ausgestrahlt wird, entscheidet die Steuereinheit 43 die dann zum richtigen Zeitpunkt die entsprechenden Daten erneut zu dem OFDM-Modulator 44 leitet. In der Steuereinheit 43 werden auch die nötigen Steuerinformationen generiert, die am Anfang von jedem Übertragungsrahmen in dem Feld 12 (FIC Feld) übertragen werden. Hier wird dann auch die entsprechende Information eingefügt, welches Rundfunkprogramm wiederholt ausgestrahlt wird, wann es wiederholt ausgestrahlt wird, welche Kapazitätseinheiten es bei der erstmaligen Ausstrahlung belegt und welche Kapazitätseinheiten bei der wiederholten Ausstrahlung belegt werden.

Figur 5 zeigt jetzt die Maßnahmen, die in einem entsprechend ausgelegten Rundfunkempfänger erforderlich sind, um das erfindungsgemäße Übertragungsverfahren zu realisieren. Mit der Bezugszahl 50 ist die Empfangsantenne bezeichnet. Mit der Bezugszahl 51 ist eine Hochfrequenzstufe bezeichnet, in der die Umsetzung des empfangenen Signals in ein komplexes Basisbandsignal erfolgt. Mit der Bezugszahl 52 ist ein Analog/Digital-Wandler bezeichnet. Hier werden die Inphase- und Quadratur-Komponenten des komplexen Basisbandsignals abgetastet. Die Abtastwerte werden in dem nachfolgenden OFDM/DQPSK-Demodulator 53 einer Fourier Transformation unterzogen. Über einen Multiplexer 54 werden die gewonnen komplexen Zahlen einem Kanaldecoder 55 zugeführt. Der Kanaldecoder 55 wird von einer Auswerteeinheit 56 gesteuert. In dieser Auswerteeinheit 56 werden die in dem Feld 12 übertragenen FIC-Informationen ausgewertet. Da in dem Feld 12 auch die Information übertragen wird, ob ein Rundfunkprogramm mehrfach ausgestrahlt wird innerhalb des Übertragungsrahmens und für jedes übertragene Rundfunkprogramm mitgeteilt wird, welche Kapazitätseinheiten es belegt, wird auch der Multiplexer 54 durch die Auswerteeinheit 56 angesteuert. Wie an der Umschaltrichtung des Multiplexers 54 erkennbar ist, werden zuerst die Daten des Rundfunkprogramms A einem Zwischenspeicher 57 zugeführt. Darin werden sämtliche Daten des Rundfunkprogramms A gespeichert. Anschließend werden die Daten der Rundfunkprogramme B und C auf den Kanaldecoder 55 weitergeleitet. Danach stehen, wie in Figur 1 dargestellt, erneut die Daten der zweiten Ausstrahlung des Rundfunkprogramms A an. Der Multiplexer 54 wird entsprechend in die vierte Position geschaltet. Diese Daten gelangen dann zu einer Summationsstelle 58. Hier werden die anstehenden Daten mit den entsprechenden Daten im Zwischenspeicher 57 addiert. Die Summationswerte werden dann dem Kanaldecoder 55 zugeleitet. Anhand der eingestellten Information, welches der fünf möglichen Programme wiedergegeben werden soll, werden durch die Auswerteeinheit 56 gesteuert, nur die entsprechend decodierten Daten zu dem Tondecoder 59 weitergeleitet, der die Daten wieder in analoge Signale umwandelt und dem Lautsprecher 60 zuführt.

Das beschriebene Verfahren und die beschriebenen Anordnungen sind insbesondere bei dem digitalen Hörrundfunk DAB vorteilhaft einsetzbar. Genau so gut sind aber auch Anwendungen im Bereich des digitalen Fernsehrundfunks oder auch beim Mobilfunk denkbar. Natürlich liegt auch die mehrfache Wiederholung von Audio-Daten einzelner Rundfunkprogramme in einem Übertragungsrahmen im Bereich der Erfindung. Auch die wiederholte Übertragung von zwei oder mehr verschiedenen Rundfunkprogrammen im gleichen oder verschiedenen Übertragungsrahmen ist zur Erfindung zugehörig anzusehen. Die Erfindung wurde im Zusammmenhang mit der bei DAB üblichen differentiellen Modulationsart DQPSK beschrieben. Es ist aber auch möglich eine andere Modulationsart wie z.B. QPSK (Quadratur Phase Shift Keying) oder QAM (Quadratur Amplitude Modulation) einzusetzen. In diesen Fällen sind die Entscheidungsvariablen nach den dort gültigen Vorschriften zu bilden. Die Addition der komplexen Werte nach der Fourier-Transformation findet aber ebenfalls, wie beschreiben, statt.

**Patentansprüche**

1. Verfahren zum Übertragen von digitalen Daten, insbesondere Ton- und/oder Bilddaten, wenigstens eines Rundfunkprogramms über störbehaftete Rundfunkkanäle, wobei die in Form komplexer Werte vorliegenden Daten des Rundfunkprogramms mindestens einer Trägerwelle aufmoduliert werden, wobei die Daten eines Zeitabschnitts des mindestens einen Rundfunkprogramms in einem Übertragungsrahmen übertragen werden, **dadurch gekennzeichnet**, daß die Daten des jeweiligen Zeitabschnitts des Rundfunkprogramms (A) wenigstens einmal wiederholt übertragen werden, und daß zur Gewinnung zuverlässiger Werte bezüglich des Modulationszustandes der mindestens einen Trägerwelle die in einem Demodulator (53) gewonnenen, einander entsprechenden komplexen Werte der Einzelübertragungen zueinander addiert werden.

2. Verfahren nach Anspruch 1, **dadurch gekennzeichnet**, daß in dem Übertragungsrahmen die Daten eines Zeitabschnitts von mehreren unterschiedlichen Rundfunkprogrammen (A,B,C,D,E) übertragen werden.

3. Verfahren nach Anspruch 1 oder 2, **dadurch gekennzeichnet**, daß der Übertragungsrahmen ein Kopffeld (11), ein Steuerungsfeld (12) und ein Datenfeld (13) enthält.

4. Verfahren nach einem der vorhergehenden Ansprüche, **dadurch gekennzeichnet**, daß die wenigstens eine wiederholte Übertragung der Daten eines Zeitabschnitts eines Rundfunkprogramms (A) in demselben Übertragungsrahmen geschieht, in dem auch die erstmalige Übertragung der Daten des gleichen Zeitabschnitts dieses Rundfunkprogramms (A) stattgefunden hat.

5. Verfahren nach Anspruch 4, **dadurch gekennzeichnet**, daß die wiederholte Übertragung der Daten eines Zeitabschnitts des Rundfunkprogramms (A) innerhalb des Übertragungsrahmens erst nach einem zeitlichen Mindestabstand nach der erstmaligen Übertragung derselben Daten erfolgt.

6. Verfahren nach einem der Ansprüche 1 bis 3, **dadurch gekennzeichnet**, daß die wenigstens eine wiederholte Übertragung der Daten eines Zeitabschnitts des Rundfunkprogramms (A) in einem anderen, späteren Übertragungsrahmen geschieht als die erstmalige Übertragung der Daten des gleichen Zeitabschnitts des Rundfunkprogramms (A).

7. Verfahren nach einem der vorhergehenden Ansprüche, **dadurch gekennzeichnet**, daß als Modulationsverfahren das Multiträgermodulationsverfahren OFDM (Orthogonal Frequency Division Multiplexing) verwendet wird und daß bei der Übertragung der Daten mit dem Modulationsverfahren OFDM die sich entsprechenden Bits der Daten bei der erstmaligen Übertragung und der wenigstens einen wiederholten Übertragung auf unterschiedlichen Trägerwellen übertragen werden.

8. Verfahren nach einem der vorhergehenden Ansprüche, **dadurch gekennzeichnet**, daß die Daten eines Zeitabschnitts des Rundfunkprogramms (A) senderseitig einer Kanalkodierung unterzogen werden und empfängerseitig einer Kanaldekodierung unterzogen werden und daß die Addition der komplexen Zahlen (20, 21) für die mindestens eine Trägerwelle vor der Kanaldekodierung stattfindet.

9. Verfahren nach einem der Ansprüche 3 bis 8, **dadurch gekennzeichnet**, daß in dem Steuerungsfeld (12) des Übertragungsrahmens senderseitig eine Information eingeschrieben wird, welches Rundfunkprogramm (A) wiederholt übertragen wird und ab welchem Bit die erstmalige und wiederholte Übertragung der Daten des Rundfunkprogramms (A) beginnt.

10. Vorrichtung zum Empfang von digital codierten Daten eines Rundfunkprogramms, die nach einem Verfahren zum Übertragen von digitalen Daten wenigstens eines Rundfunkprogramms über störbehaftete Rundfunkkanäle übertragen werden, bei dem die Daten des Rundfunkprogramms mindestens einer Trägerwelle aufmoduliert werden, bei dem die Daten eines Zeitabschnitts des mindestens einen Rundfunkprogramms in einem Übertragungsrahmen übertragen werden und bei dem die Daten des jeweiligen Zeitabschnitts des Rundfunkprogramms (A) wenigstens einmal wiederholt übertragen werden, wobei die Empfangsvorrichtung eine Hochfrequenz-Umsetzungsstufe, einen Analog-Digital-Wandler zur Abtastung des von der Hochfrequenz-Umsetzungsstufe gelieferten Signals und einen Demodulator-Schaltkreis umfaßt, wobei ein Zwischenspeicher (57) vorgesehen ist, in dem wenigstens die in dem Demodulator-Schaltkreis (53) gewonnenen, die Daten des Zeitabschnitts des Rundfunkprogramms (A) bei der erstmaligen Übertragung repräsentierenden komplexen Zahlen zwischengespeichert werden, und daß eine Addierstufe (58) vorgesehen ist, in der die komplexen Zahlen im Zwischenspeicher (57) zu den entsprechenden komplexen Zahlen der wenigstens einen wiederholten Übertragung der gleichen Daten des Rundfunkprogramms (A) addiert werden.

11. Vorrichtung nach Anspruch 10, **dadurch gekennzeichnet**, daß die addierten komplexen Zahlen (20, 21) einem Kanaldekodierschaltkreis (55) zugeführt werden, der daraus Werte für den Modulationszustand der mindestens einen Trägerwelle gewinnt.

12. Vorrichtung nach Anspruch 10 oder 11, **dadurch gekennzeichnet**, daß der Demodulatorschaltkreis ein OFDM (Orthogonal Frequency Division Multiplexing)-Demodulator ist.

13. Vorrichtung nach einem der Ansprüche 10 bis 12, **dadurch gekennzeichnet**, daß eine Auswertestufe (56) vorgesehen ist, in der die Daten in einem Steuerungsfeld (12) eines Übertragungsrahmens ausgewertet werden und daß ausgehend von den Informationen in dem Steuerungsfeld (12) ein Multiplexer (54) angesteuert wird, der die am Demodulatorschaltkreis (53) anstehenden komplexen Zahlen (20, 21) entweder dem Zwischenspeicher (57), dem Kanaldecodierschaltkreis (55) oder der Addierstufe (58) zuführt.

## Claims

1. Method for transmitting digital data, particularly sound and/or image data, for at least one radio programme via radio channels which are subject to interference, the radio programme's data, which is in the form of complex values, being modulated onto at least one carrier wave, the data in one time slot in the at least one radio programme being transmitted in a transmission frame, **characterized in that** the data in the respective time slot in the radio programme (A) is repeatedly transmitted at least once, and in that, to obtain reliable values for the modulation state of the at least one carrier wave, the individual transmissions' mutually corresponding complex values obtained in a demodulator (53) are added to one another.

2. Method according to Claim 1, **characterized in that** the data in a time slot in a plurality of different radio programmes (A, B, C, D, E) is transmitted in the transmission frame.

3. Method according to Claim 1 or 2, **characterized in that** the transmission frame contains a header field (11), a control field (12) and a data field (13).

4. Method according to one of the preceding claims, **characterized in that** the at least one repeated transmission of the data in a time slot in a radio programme (A) takes place in the same transmission frame in which the data in the same time slot in this radio programme (A) was transmitted the first time.

5. Method according to Claim 4, **characterized in that** the repeated transmission of the data in a time slot in the radio programme (A) within the transmission frame takes place only after a minimum time interval after transmission of the same data the first time.

6. Method according to one of Claims 1 to 3, **characterized in that** the at least one repeated transmission of the data in a time slot in the radio programme (A) takes place in another transmission frame, which is later than that for the transmission of the data in the same time slot in the radio programme (A) the first time.

7. Method according to one of the preceding claims, **characterized in that** the modulation method used is the multicarrier modulation method OFDM (Orthogonal Frequency Division Multiplexing), and in that, for transmitting the data using the modulation method OFDM, the corresponding bits of the data in the first transmission and in the at least one repeated transmission are transmitted on different carrier waves.

8. Method according to one of the preceding claims, **characterized in that** the data in a time slot in the radio programme (A) is subjected to channel coding at the transmitter end and is subjected to channel decoding at the receiver end, and in that the complex numbers (20, 21) for the at least one carrier wave are added before the channel decoding.

9. Method according to one of Claims 3 to 8, **characterized in that** information about which radio programme (A) is being repeatedly transmitted and from which bit the first and repeated transmissions of the data for the radio programme (A) start is written into the control field (12) of the transmission frame at the transmitter end.

10. Apparatus for receiving a radio programme's digitally coded data transmitted using a method for transmitting digital data for at least one radio programme via radio channels which are subject to interference, where the radio programme's data is modulated onto at least one carrier wave, where the data in one time slot in the at least one radio programme is transmitted in a transmission frame and where the data in the respective time slot in the radio programme (A) is repeatedly transmitted at least once, the reception apparatus comprising a radio-frequency conversion stage, an analogue/digital converter for sampling the signal supplied by the radio-frequency conversion stage and a demodulator circuit, a buffer store (57) being provided which buffers at least the complex numbers which are obtained in the demodulator circuit (53) and represent the data in the time slot in the radio programme (A) during the first transmission, and an adding stage (58) being provided in which the complex numbers in the buffer store (57) are added to the corresponding complex numbers for the at least one repeated transmission of the same data for the radio programme (A).

11. Apparatus according to Claim 10, **characterized in that** the added complex numbers (20, 21) are supplied to a channel decoding circuit (55) which uses them to obtain values for the modulation state of the at least one carrier wave.

12. Apparatus according to Claim 10 or 11, **characterized in that** the demodulator circuit is an OFDM (Orthogonal Frequency Division Multiplexing) demodulator.

13. Apparatus according to one of Claims 10 to 12, **characterized in that** an evaluation stage (56) is provided in which the data in a control field (12) of a transmission frame is evaluated, and in that, on the basis of the information in the control field (12), a multiplexer (54) is controlled which supplies the complex numbers (20, 21) waiting on the demodulator circuit (53) either to the buffer store (57), to the channel decoding circuit (55) or to the adding stage (58).

## Revendications

1. Procédé de transmission de données numériques, notamment de données audio et/ou vidéo, d'au moins un programme radio par des canaux radiophoniques parasités,

> les données présentes sous la forme de valeurs complexes pour le programme radiophonique, étant appliquées par modulation à au moins une porteuse,
> les données d'un segment de temps d'au moins un programme radiophonique, étant transmises dans une trame de transmission,

> procédé **caractérisé en ce qu'**

> on transmet les données de chaque segment de temps du programme radiophonique (A), en les répétant au moins une fois et
> pour obtenir des valeurs fiables, relatives à l'état de modulation d'au moins une porteuse, qui ont été obtenues en sortie d'un des modulateurs (53), on additionne des valeurs complexes correspondantes pour les différentes transmissions.

2. Procédé selon la revendication 1,
**caractérisé en ce que**
dans la trame de transmission, on transmet les données d'un segment de temps de plusieurs programmes radiophoniques différents (A, B, C, D, E).

3. Procédé selon l'une quelconque des revendications 1 ou 2,
**caractérisé en ce que**
la trame de transmission contient une en-tête (11), un champ de commande (12) et un champ de données (13).

4. Procédé selon l'une quelconque des revendications précédentes,
**caractérisé en ce qu'**
au moins une transmission répétée des données d'un segment de temps d'un programme radiophonique (A) est effectuée dans la même trame de transmission que celle de la première transmission des données du même segment de temps de ce programme radiophonique (A).

5. Procédé selon la revendication 4,
**caractérisé en ce que**
la transmission répétée des données d'un segment de temps du programme radiophonique (A) se fait, dans la trame de transmission, seulement au bout d'un intervalle de temps minimum après la première transmission de ces mêmes données.

6. Procédé selon l'une quelconque des revendications 1 à 3,
**caractérisé en ce qu'**
on effectue au moins une transmission répétée des données d'un segment de temps du programme radiophonique (A) dans une autre trame de transmission ultérieure à la première transmission des données du même segment de temps du programme radiophonique (A).

7. Procédé selon l'une quelconque des revendications précédentes,
**caractérisé en ce que**
comme procédé de modulation du procédé de modulation à porteuse multiple ORDM (multiplexage par division de fréquence orthogonale), on transmet les mêmes bits correspondants des données lors de la première transmission, et au moins une transmission répétée sur des porteuses différentes.

8. Procédé selon l'une quelconque des revendications précédentes,
**caractérisé en ce que**
les données d'un segment de temps du programme radiophonique (A) sont soumises, du côté de l'émetteur, à un codage de canal et, du côté récepteur, à un décodage de canal, tandis que l'addition des nombres complexes 20, 21 d'au moins une onde porteuse se fait avant le décodage de canal.

9. Procédé selon l'une quelconque des revendications 3 à 8,
**caractérisé en ce que**
dans le champ de commande (12) de la trame de transmission, on inscrit, du côté de l'émetteur, une information qui est transmise de manière répétée par le programme radiophonique (A), cette information indiquant, à partir de quel bit la première transmission et la transmission répétée des données du programme radiophonique (A) commencent.

10. Dispositif de réception de données numériques codées d'un programme radiophonique,
des données étant transmises selon un procédé de transmission de données numériques d'au moins un programme radiophonique par des canaux radiophoniques parasités,
selon lequel

on module les données du programme radiophonique sur au moins une porteuse,

on transmet les données d'un segment de temps d'au moins un programme radiophonique dans une trame de transmission, et

les données du segment de temps respectif du programme radiophonique (A) sont transmises et étant répétées au moins une fois,

le dispositif récepteur comportant un étage de conversion haute fréquence, un convertisseur analogique-numérique pour détecter les signaux fournis par l'étage de conversion haute fréquence, un circuit de commutation et de démodulation,

une mémoire intermédiaire (57) recevant, de façon intermédiaire, les nombres complexes représentant les données du segment de temps du programme radiophonique (A) pour la première transmission, et qui ont été fournis par le démodulateur (53), et un étage additionneur (58) qui additionne des nombres complexes de la mémoire intermédiaire (57), aux nombres complexes correspondants d'au moins une transmission répétée du programme radiophonique (A).

11. Dispositif selon la revendication 10,
**caractérisé en ce que**
les nombres complexes additionnés (20, 21) sont appliqués à un décodeur de canal (55) qui en extrait les valeurs de l'état de modulation d'au moins une porteuse.

12. Dispositif selon l'une quelconque des revendications 10 ou 11,
**caractérisé en ce que**
le démodulateur est un démodulateur OFDM (démodulateur à multiplexage à division de fréquence orthogonale).

13. Dispositif selon l'une quelconque des revendications 10 à 12,
caractérisé par
une unité d'exploitation (56) qui exploite les données d'un champ de commande (12) d'une trame de transmission et, en partant des informations contenues dans le champ de commande (12), on commande un multiplexeur (54) qui applique les nombres complexes (20, 21) fournis par le démodulateur (53), soit à la mémoire intermédiaire (57), soit au décodeur de canal (55), soit à l'additionneur (58).

# Fig. 1

| A | B | C | A | D | E |
|---|---|---|---|---|---|
| 14 | 15 | 16 | 17 | 18 | 19 |

10 11 12 13

→ t

EP 0 848 877 B1

# Fig. 2

# Fig. 3

EP 0 848 877 B1

# Fig. 4

# Fig. 5

EP 0 848 877 B1